# EUROPÄISCHE PATENTSCHRIFT

(11) **EP 2 128 237 B1**
(45) Veröffentlichungstag und Bekanntmachung des Hinweises auf die Patenterteilung: **08.02.2012**
(21) Anmeldenummer: 09160674.9
(22) Anmeldetag: 19.05.2009
(51) Int. Cl.: C12C 12/00, C12G 3/02

(54) **Herstellung von hochalkoholischen Bockbieren und Malzweinen unter Verwendung von Saccharomyces diastaticus**
Production of bock beers with high alcohol content and malt wines using the yeast Saccharomyces diastaticus
Fabrication de bocks et de vins de malt hautement alcoolisés en utilisant la levure Saccharomyces diastaticus

(30) Priorität: 19.05.2008 DE 102008024168
(43) Veröffentlichungstag der Anmeldung: 02.12.2009
(73) Patentinhaber: Tscheuschner, Georg, 91710 Gunzenhausen (DE)
(72) Erfinder: Tscheuschner, Georg, 91710 Gunzenhausen (DE)
(74) Vertreter: von Kreisler Selting Werner

(56) Entgegenhaltungen:
- BINDER G: "Übersicht Reinzuchthefen- Handelspräparate in Deutschland- Stand: Aug.2003"[Online] 2003, XP002545785 Gefunden im Internet: URL:http://www.dlr-rheinpfalz.rlp.de/inter net/global/themen.nsf/2eca2af4a2290c7fc125 6e8b005161c9/f8ab3d8cb72e7746c1256fb8003df 866?OpenDocument> [gefunden am 2009-09-14]
- "Roggenwein"[Online] 6. April 2004 (2004-04-06), XP002545786 Gefunden im Internet: URL:http://www.razyboard.com/system/moreth read-roggenwein-fruchtweinkeller-89082-248 556-0.html> [gefunden am 2009-09-14]
- VERMA G ET AL: "Bioconversion of starch to ethanol in a single-step process by coculture of amylolytic yeasts and Saccharomyces cerevisiae 21" BIORESOURCE TECHNOLOGY, Bd. 72, 2000, Seiten 261-266, XP002545787
- TUBB ET AL: "Amylolytic yeasts for commercial applications" TRENDS IN BIOTECHNOLOGY, ELSEVIER PUBLICATIONS, CAMBRIDGE, GB, Bd. 4, Nr. 4, 1. April 1986 (1986-04-01), Seiten 98-104, XP023594871 ISSN: 0167-7799 [gefunden am 1986-04-01]
- N.N., [Online] Gefunden im Internet: <URL:www.pcr-lab.com/de/lebensmittel/saccha romyces-diastaticus> [gefunden am 2011-01-17]
- N.N., [Online] Gefunden im Internet: <URL:www.bc-diagnostics.de/?cid=1275049876& name=Getr%C3%A4nke>

## Beschreibung

Die vorliegende Erfindung betrifft ein Verfahren zur Herstellung von obergärigen oder untergärigen Bieren und Malzweinen unter Verwendung einer Hefe der Gattung *Saccharomyces diastaticus* sowie ein Biere und Malzweine, die mit diesem Verfahren erhältlich sind.

### Hintergrund der Erfindung

Bier und Malzweine sind Getränke aus einer teilweise oder nahezu vollständig vergorenen Stammwürze.

Zu Herstellung der Würze wird zunächst eine Maische bestehend aus Getreidemalz und Wasser gebildet. Zur Malzbereitung werden vorwiegend Weizen und/oder Gerste verwendet. Das Maischen dient dem Aufschluss des Getreides d. h. der enzymatischen Spaltung der im Getreide enthaltenen Kohlenhydrate in kleinere, für die Hefen vergärbare Einheiten durch die während des Malzbereitung freigesetzten Enzyme. Hierzu wird die Maische verschiedenen Temperaturen ausgesetzt (Temperaturprogramm). Dies dient dazu, den verschiedenen anwesenden Enzyme optimale Reaktionsbedingungen zu bieten. Nach Abtrennung der Feststoffe (genannt "Abläutern") erhält man die Würze, welche dann im Kessel unter Zugabe von Hopfen gekocht wird.

Bei der Vergärung der Würze mit herkömmlichen Brauereihefen, auch Betriebshefen genannt, werden je nach Hefetyp und Gärprozessführung untergärige oder obergärige Biere erhalten. Bei der Herstellung von untergärigen Bieren setzt sich die Hefe gegen Ende der Hauptgärung am Boden des Gärgefäßes ab und die Temperaturen während des Gärvorgangs liegen bei unter 10 °C. Sie sind somit niedriger als bei der Herstellung obergäriger Biere, wobei die Temperaturen mehr als 10 °C betragen und die eingesetzten Hefen sich gegen Ende der Hauptgärung an der Oberfläche des Bieres ansammeln.

Der Alkoholgehalt des erhaltenen Bieres ist dabei neben der Würze auch von der Gestaltung des Brauverfahrens und insbesondere des Gärprozesses und der Art der Hefe beschränkt. Dies ist insbesondere relevant für die Herstellung von Bockbieren und Malzweinen, da übliche Bierhefen nur einen Alkoholgehalt von maximal 10 % ermöglichen und oberhalb dieses Wertes absterben. Ebenfalls nicht möglich ist nach dem deutschen Reinheitsgebot eine Zugabe von Alkohol zu dem Bier nach beendetem Gärprozess.

Die Verwendung von Hefen der Gattung *Saccharomyces diastaticus* zur Vergärung von stärkehaltigen Brennerei-, Getreide- und Kartoffelmaischen ist aus G. Binder, URL:http://www.dlr-rehinpfalz.rlp.de (2003) bzw. zur Herstellung von Roggenwein ist aus URL:http://www-razyboardcom/system/moreth read-roggenwein-fruchtweinkeller-89082-248 556-html (April 2004) bekannt. Daneben wird in G. Verma et al., Bioresource Technology, 72:261-266 (2000) die Vergärung einer nicht-hydrolysierten Stärke durch eine Kokultur aus S. cerevisae und S. diastaticus beschrieben. Es besteht jedoch ein generelles Bedürfnis zur Herstellung von Starkbieren nach dem deutschen Reinheitsgebot, die nicht der oben angeführten Beschränkung des Alkoholgehalts unterworfen sind.

### Kurze Zusammenfassung der Erfindung

Überraschenderweise wurde nun gefunden, dass bestimmte alkoholtolerante Hefen, die üblicherweise bei der Herstellung von (stärkehaltigen) Brennmaischen eingesetzt werden, nämlich Hefen der Gattung *Saccharomyces diastaticus*, im Herstellungsverfahren eines obergärigen oder untergärigen Bieres eingesetzt werden können. Die vorliegende Erfindung betrifft somit
(1) ein Verfahren zur Herstellung eines Starkbieres (Bockbieres) oder Malzweines, umfassend das Umsetzen einer Starkbierwürze in einem ober- und/oder untergärigen Gärschritt in Gegenwart einer alkoholtoleranten Hefe der Gattung *Saccharomyces diastaticus* und einer obergärige und/oder untergärige Betriebshefe der Gattung Saccharomyces Cerevisiae oder Saccharomyces carlsbergensis,
(2) eine bevorzugte Ausführungsform des Verfahrens (1), wobei das Bier ein untergäriges Bier ist und die Würze eine untergärige Würze ist;
(3) eine bevorzugte Ausführungsform des Verfahrens (1), wobei das Bier ein obergäriges Bier ist und die Würze eine obergärige Würze ist;
(4) eine bevorzugte Ausführungsform des Verfahrens (1), wobei ein Malzwein erzeugt wird und
(5) ein Bier oder Malzwein, das/der durch ein Verfahren nach (1) bis (4) erhältlich ist.

### Detaillierte Beschreibung der Erfindung

Die in dem Verfahren (1) eingesetzte Würze ist vorzugsweise eine Würze aus 100 % Weizenmalz oder 100 % Gerstenmalz und/oder anderen Malzen, und/oder Mischungen daraus, die zur Bierherstellung geeignet sind. Es ist bevorzugt, dass die Würze vor der Vergärung einen Malzzuckeranteil von über 20% (Gew.-%), vorzugsweise 25 bis 40 Gew.-% aufweist. Bei der Herstellung von Bier ist ein Vermischen der Würze mit anderen Quellen vergärbarer Zucker vorzugsweise ausgeschlossen, d. h. das Gärverfahren erfolgt nach dem deutschen bzw. bayerischen Reinheitsgebot. Bei einem Verfahren zur Herstellung von Bier, das nicht gemäß dem deutschen/bayerischen Reinheitsgebot erfolgt, bzw. bei der Herstellung von Malzweinen ist eine Zugabe solcher Zucker hingegen möglich.

In dem/den obergärigen und/oder untergärigen Gärschritt(en) wird neben der Hefe der Gattung *Saccharomyces diastaticus* eine obergärige und/oder untergärige Betriebshefe eingesetzt.

Die in dem erfindungsgemäßen Verfahren eingesetzte Hefe der Gattung *Saccharomyces diastaticus* ist eine exoamylolytische Hefe von hoher Alkoholtoleranz, die mit allen anderen Bier-, Wein- und Sekthefen kombinierbar ist und im Handel unter der Bezeichnung "SIHA AmyloFerm" der Firma Begerow (www.begerow.de) erhältlich ist. Sie besitzt die folgenden Eigenschaften:
- hohe Osmophilität zur Überwindung der Anfangs-Zuckerkonzentration;
- reintönige Vergärung auch unter Stressfaktoren (osmotischer Druck, hoher Alkoholgehalt);
- hohe Alkoholtoleranz bis 18 Vol.-% Alkohol unter ansonsten günstigen Parametern (wie ausreichende Aminostickstoffversorgung, Zinkversorgung über das Malz, anfänglicher Atmungsstoffwechsel über Luftzufuhr zur Anreicherung von Adenosintriphosphat als Energiespeicher, optimaler Gärtemperatur ca. 15 Grad.

Zu hohe Temperaturen über 18 Grad schädigen die Hefe bei hoher Alkoholkonzentration (lethale Temperatur) ,zu niedrige Temperatur führt zum Gärstop und bei langer Standzeit unter hohem Alkohol zum Absterben der Hefe. Eine Revitalisierung ist dann nicht mehr möglich.

Die wichtigste Eigenschaft der Hefe ist die exoamylolytische Spaltung der Zucker, d. h. die Hefe ist in der Lage vorher zu große höhere Zuckerketten durch Enzymexkretion außerhalb der Zellmembran zu spalten und dann aufzunehmen.

Zugabe der Hefe erfolgt im Gärkeller parallel zu einer weiteren Betriebshefe der Gattung *Saccharomyces cerevisiae* oder *S. carlsbergensis*, und einer nachfolgenden Endvergärung im Lagertank.

Es ist aber sowohl einfach durch die Hefe, als auch durch einen Enzym-Malzauszug (Kaltauszug) oder einer Kombination bei der ein hoher Vergärungsgrad erreichbar. Die Zugabe von z. B. 5-10% sog. Kalten Malzauszug ist ebenfalls eine Ausführungsform des erfindungsgemäßen Verfahrens. Herstellung eines kalten Malzauszuges kann wie folgt erfolgen:
Bei der normalen Sudhausarbeit wird Malz verschrotet, mit lauwarmem Wasser gemischt und unter Einhaltung verschiedener Rasten enzymatisch aufgeschlossen. Nach der verlängerten 62 Grad Rast (β-Amylaserast) zieht man einen kleinen Teil ab, klärt ihn und gibt diesen ungekochten Malzauszug später im Gärkeller zu. Die Amylasen sind erhalten und können nun weiter kleine Zuckermoleküle von den größeren Ketten abspalten, die normalerweise als unvergärbarer Restzucker übrig bleiben.

Die in dem untergärigen Gärschritt der Ausführungsform (2) der Erfindung eingesetzte untergärige Betriebshefe ist vorzugsweise vom Typ 34/70, 34/78, 44, 120, 128, 168, 172, 194, 199 bzw. eine untergärige Betriebshefe (Staubhefe) vom Typ 66, 71, 167, insbesondere wird Typ 34/70 eingesetzt.

Der untergärige Gärschritt wird bei einer Temperatur von 10 bis 25, vorzugsweise von 13 bis 18 °C durchgeführt.

In dem Verfahren (2) erfolgt nach Erreichen eines Alkoholgehalts von ca. 10 Vol.-% eine Endvergärung ( z. B. im Lagertank), wobei diese unter den selben Bedingungen stattfindet wie der erste Gärschritt, nämlich bei einer Temperatur von 10 bis 25, vorzugsweise von 13 bis 18 °C und für 2 bis 3 Monate.

Die in dem Verfahren (3) eingesetzte obergärige Würze ist vorzugsweise eine Weißbier- oder Weizenbierwürze aus Weizenmalz oder einem Gemisch aus Weizenmalz und einer anderen Malzsorte, insbesondere Gerstenmalz, Dinkelmalz und/oder einem anderen Malz, das sich zur Bierherstellung eignet. Bei den Malzgemischen beträgt der Weizenmalzanteil vorzugsweise wenigstens 50 Gew.-%. Obergärige Würzen auf Gerstenmalzbasis können ebenfalls eingesetzt werden.

In dem Verfahren gemäß Ausführungsform (3) erfolgt der erste Gärschritt in Gegenwart einer obergärigen Betriebshefe (z. B. eine obergärige Betriebshefe vom Typ 68, 127, 149, 175 oder 177, beziehungsweise die alkoholtolerante Hefe V1116 von Lalvin, insbesondere eine Betriebshefe vom Typ 68, 175, oder V1116) bei einer Temperatur von 10 bis 20 °C, vorzugsweise bei 15 bis 18 °C.

Das verfahren gemäß Ausführungsform (3) der Erfindung umfasst weiterhin einen Nachgärschritt unter Zusatz von "Speise". Die "Speise" im Sinne der vorliegenden Erfindung kann dabei eine "Kräuse" oder ein "Kräusenbier" (d. h. ein obergäriges und/oder untergäriges Jungbier (in Gärung befindlicher Würze), das noch einen hohen vergärbaren Restextrakt aufweist und in dem sich die Hefe im exponentiellen Wachstumsstadium befindet), ein kalter Malzauszug wie vorstehend definiert und/oder eine nicht vergorene, mit Hefe versehene, ober- und/oder untergärige Würze oder dergleichen sein. Besonders bevorzugt ist ein untergäriges Kräusenbier auf Basis von Gerstenmalz.

Es ist dabei besonders bevorzugt, dass in dem Nachgärschritt neben Hefe der Gattung *Saccharomyces diastaticus* eine ober- und/oder untergärige Betriebshefe eingesetzt wird, insbesondere eine untergärige Betriebshefe (Bruchhefe) vom Typ 34/70, 34/78, 44, 120, 128, 168, 172, 194 oder 199 bzw. eine untergärige Betriebshefe (Staubhefe) vom Typ 66, 71 oder 167 (alle Hefen erhältlich bei der Hefebank der Universität Weihenstephan). Weiterhin ist bevorzugt, dass der Nachgärschritt bei einer Temperatur von 10 bis 20, vorzugsweise von 15 bis 18°C durchgeführt wird. Weiterhin ist bevorzugt, dass der Anteil der Speise bzw. des Kräusenbiers am Gesamtnachgärvolumen 5 bis 20 vorzugsweise 8 bis 15 Gew.-% beträgt. Weiterhin ist bevorzugt, dass der CO₂-Gehalt des obergärigen Bieres 3 bis 12, vorzugsweise 6 bis 9 g/l beträgt.

Bei der Herstellung von Malzwein gemäß Ausführungsform (4) können dem durch Sudverfahren hergestellten Malz noch weitere Quellen vergärbarer Zucker, vorzugsweise leicht vergärbare Zucker wie Dextrose und dgl., zugegeben werden. Die Vergärung erfolgt durch eine Hefe der Gattung *Saccharomyces diastaticus* in Kombination mit wenigstens einer weiteren vorstehend beschriebenen Betriebshefe bei einer Temperatur von 10 bis 25 °C, vorzugsweise bei 15 bis 18 °C. Nach Erreichen eines Alkoholgehalts von ca. 10 Vol.-% erfolgt eine Endvergärung (z. B. im Lagertank im Gärkeller) einer Temperatur von 13 bis 18 °C (z. B. für 2 bis 3 Monate), wobei keine CO₂-Anreicherung stattfindet. Der gemäß dem erfindungsgemäßen Verfahren erhaltene Malzwein kann nachfolgend, falls erwünscht, aromatisiert und filtriert werden.

Der Alkoholgehalt des Bieres und des so hergestellten Malzweins kann durch nachfolgenden so hergestellten Aufkonzentrierschritt mittels des üblichen Eisbockverfahrens (Auskristallisation des Wassers und Abfiltern der Eiskristalle) weiter erhöht werden).

Das so hergestellte Bier oder der so hergestellte Malzwein kann nach Beendigung des Gärung in Flaschen oder Fässer abgefüllt werden.

Durch das erfindungsgemäße Verfahren kann ein Bier oder ein Malzwein mit einem Alkoholgehalt von deutlich über 10 Vol.-% erhalten werden. Zwar ist bei Weinen aus zolltechnischen Gründen erwünscht, dass sie nicht mehr als 15,0 Vol.-% Alkohol enthalten, da sie sonst als Branntwein-Zwischenprodukt gelten, für das hohe Abgaben anfallen. Bei Bieren und Malzweinen ist dies unkritisch, sie können mit höheren Alkoholgehalten ohne zusätzliche Abgaben vertrieben werden, obgleich bei Bockbieren höhere Alkoholgehalte - z.B. von über 20 Vol.%, bei Eisbocken auch von über 25 Vol.%, ja sogar von über 30 Vol.% - realisierbar sind.

Die Erfindung wird anhand der nachfolgenden Beispiele näher erläutert.

### Beispiele

### Beispiel 1: Herstellung der Würze

Zur Herstellung hochalkoholische Bockbiere gehört die nötige Menge vergärbarer Zucker. Zur Erreichung wird die Maische sehr dick angesetzt, d. h. zum Hauptguss werden 400 kg Malz gegeben. Gesamtmaischemenge: 1000 I.

Nach Enzymrasten von 44°C (endo-β-Glucanasen) und 52 - 54 °C (Eiweißrast) werden die beiden Amylasenrasten (62 °C und 72 °C) je ca. 0,5 h ausgiebig bis zur vollständigen Verzuckerung geführt. Nach Abläutern und Aufkonzentration durch atmosphärische und evtl. anschließende Vakuumkochung (Schonung der Würze - geringere Kochbelastung) entsteht eine Würze mit 25 - 40 % Malzzuckeranteil (25 - 40° Plato). Zum Erreichen von hohen Stammwürzgehalten von 35 - 40 ° Plato ist - zur Vermeidung einer hohen Kochbelastung - eine Vakuumkochung bevorzugt.

### Beispiel 2: Herstellung eines untergärigen Bockbieres

Die unter 1. erhaltene Würze wird mittels Kreuzstromwärmetauscher abgekühlt und von Anfang an mit *S. diastaticus*, parallel zu einer üblichen untergärigen Betriebshefen, z. B. Typ 34 Weihenstephan, angesetzt. Die Vergärung erfolgt im offenen Gärbottich bei 13 - 18 °C. Nach Erreichung von ca. 10 % Alkohol erfolgt die Nachgärung (zur Kohlensäureanreicherung) und Lagerung im geschlossenen Lagertank ebenfalls bei 13 - 18 °C. Bei der nunmehr erfolgenden Endvergärung wird das Bier schrittweise unter Druck gesetzt, bis die gewünschte CO₂-Anreicherung erreicht ist.

### Beispiel 3: Herstellung eines obergärigen Bockbiers

Wie bei untergärigen Bieren wird bei obergärigen Bieren die Würze im offenen Gärbottich angestellt (13 - 18 °C). Von Beginn an werden *S. diastaticus* und eine OG-Hefe (z. B. S. cerevisiae) in allen Varianten eingesetzt. Vornehmlich alkoholadaptierte Cerevisiae-Sorten aus dem Weinbau (hier Hersteller: Lalvin, Hefe: V1116, besondere Eigenschaft: gärkräftiger obergäriger Stamm mit hoher Alkoholtoleranz und osmophilen Eigenschaften). Die Endvergärung erfolgt wie in Beispiel 2 im Gärkeller bei 13 - 18 °C. Nachfolgend erfolgt eine Kräusenzugabe zum Lagerkeller oder Flasche, wobei die Nachgärung und CO₂-Anreicherung im Lagertank oder direkt in der Flasche erfolgt. Durch die starke Trubbelastung der starken Würzen empfiehlt sich die Tankvergärung zur besseren Klärung der obergärigen Biere (bei Weizenmalzeinsatz).

### Beispiel 4:Herstellung eines Malzweines

Wie bei der Bierherstellung wird Malzzucker über das in Beispiel 1 beschriebene Sudhausverfahren gewonnen, dieser kann mit alten vergärbaren Zuckerarten, vorzugsweise leicht vergärbarer Dextrose, angereichert werden. Nach Vergärung mit *S. diastaticus* in Kombination mit wenigstens einer weiteren vorstehend beschriebenen Betriebshefe bei einer Temperatur von 15 bis 18 °C erfolgt eine Endvergärung im Lagertank im Gärkeller bei einer Temperatur von 13 bis 18 °C. Eine CO₂-Anreicherung findet nicht statt. Der erhaltene Malzwein wird, falls erwünscht, aromatisiert und nachfolgend filtriert und abgefüllt.

## Patentansprüche

1. Verfahren zur Herstellung eines Starkbieres oder eines Malzweins, umfassend das Umsetzen einer Starkbierwürze in einem ober- und/oder untergärigen Gärschritt in Gegenwart einer alkoholtoleranten Hefe der Gattung *Saccharomyces diastaticus* und einer obergärige und/oder untergärige Betriebshefe. der Gattung Saccharomyces Cerevisiae oder Saccharomyces carlsbergensis.

2. Verfahren nach Anspruch 1, wobei die Starkbierwürze eine obergärige und/oder untergärige Würze aus 100 % Weizenmalz und/oder 100 % Gerstenmalz oder anderen Malzen und/oder Mischungen daraus ist, die zur Bierherstellung geeignet ist.

3. Verfahren nach Anspruch 1 oder 2, wobei
(i) das Verfahren ohne Zugabe von anderen Quellen vergärbarer Zucker erfolgt; oder
(ii) weitere Quellen vergärbarer Zucker zugegeben werden; oder
(iii) der Würze ein kalter Malzauszug zugeben wird.

4. Verfahren nach einem oder mehreren der Ansprüchen 1 bis 3, wobei die Hefe der Gattung *Saccharomyces diastaticus* mit den anderen im Brauverfahren eingesetzten (Betriebs)Hefen verträglich ist und insbesondere keine nennenswerten, für diese Hefen toxische Metaboliten generiert und wobei vorzugsweise die Hefe der Gattung *Saccharomyces diastaticus* eine Hefe ist, die eine hohe Osmophilität zur Überwindung der Anfangs-Zuckerkonzentration, eine reintönige Vergärung auch unter Stressfaktoren und eine hohe Alkoholtoleranz bis 18 Vol.-% Alkohol aufweist.

5. Verfahren nach einem oder mehreren der Ansprüche 1 bis 4, wobei das Bier ein untergäriges Bier ist und die Würze eine untergärige Würze ist und in dem untergärigen Hauptgärschritt neben der Hefe der Gattung *Saccharomyces diastaticus* eine untergärige Betriebshefe eingesetzt wird.

6. Verfahren nach Anspruch 5, wobei
(i) die in dem untergärigen Gärschritt eingesetzte untergärige Betriebshefe vom Typ 34/70, 34/78, 44, 120, 128, 168, 172, 194, 199 bzw. eine untergärige Betriebshefe (Staubhefe) vom Typ 66, 71, 167 ist, wobei eine Hefe vom Typ 34/70 besonders bevorzugt ist; und/oder
(ii) der untergärige Gärschritt bei einer Temperatur von 10 bis 25, vorzugsweise von 13 bis 18 °C durchgeführt wird; und/oder
(iii) die Würze vor der Vergärung einen Malzzuckeranteil von über 20% Gew.-%, vorzugsweise 25 bis 40 Gew.-% enthält.

7. Verfahren nach Anspruch 5 oder 6, wobei
(i) nach erreichen eines Alkoholgehalts von ca. 10% eine Endvergärung bei einer Temperatur von 10 bis 20, vorzugsweise von 13 bis 18 °C durchgeführt wird; und/oder
(ii) zur Endvergärung ein kalter Malzauszug zugeben wird; und/oder
(iii) eine Aufkonzentration des Alkoholgehalts nach dem Eisbockverfahren erfolgt.

8. Verfahren nach einem oder mehreren der Ansprüche 1 bis 4, wobei das Bier ein obergäriges Bier ist und die Würze eine obergärige Würze ist, wobei insbesondere die obergärige Würze eine Weißbier- oder Weizenbierwürze aus Weizenmalz oder einem Gemisch aus Weizenmalz und einer anderen Malzsorte, insbesondere Gerstenmalz, Dinkelmalz und/oder einem anderen Malz, das sich zur Bierherstellung eignet, oder eine Würze aus Gerstenmalz oder einem Gemisch aus Gerstenmalz mit einer anderen der vorstehend genannten Malzsorten ist, und wobei dem obergärigen Gärschritt neben der Hefe der Gattung *Saccharomyces diastaticus* eine obergärige Betriebshefe eingesetzt wird.

9. Verfahren nach Anspruch 8, wobei
(i) die in dem obergärigen Gärschritt eingesetzte obergärige Betriebshefe vom Typ 68, 127, 149, 175, 177 oder V1116 ist, insbesondere eine Betriebshefe vom Typ 68, 175 oder V1116 ist; und/oder
(ii) der Gärschritt bei einer Temperatur von 10 bis 20, vorzugsweise von 13 bis 18 °C durchgeführt wird; und/oder
(iii) die Würze vor der Vergärung einen Malzzuckeranteil von über 20% Gew.-%, vorzugsweise 25 bis 40 Gew.-% enthält.

10. Verfahren nach Anspruch 8 oder 9 umfassend einen Nachgärschritt unter Zusatz einer Speise, vorzugsweise unter Zusatz von
(i) ober- und/oder untergärigem Kräusenbier, und/oder
(ii) einer nicht vergorenen, ober- und/oder untergärigen Würze, und/oder
(iii) einem kalten Malzauszug,
wobei (i) bis (iii) eine Betriebshefe und/oder eine Hefe der Gattung *Saccharomyces diastaticus* enthalten können.

11. Verfahren nach Anspruch 10, wobei
(i) der Nachgärschritt unter Zusatz von untergärigem Kräusenbier auf Basis von Gerstenmalz erfolgt; und/oder
(ii) wobei der Nachgärschritt bei einer Temperatur von 10 bis 20, vorzugsweise von 13 bis 18 °C durchgeführt wird; und/oder
(iii) der Anteil der Speise oder des Kräusenbiers oder des Malzauszugs am Gesamtnachgärvolumen 5 bis 20, vorzugsweise 8 bis 15 Vol.-% beträgt; und/oder
(iv) der CO₂-Gehalt des obergärigen Bieres 3 bis 12, vorzugsweise 6 bis 9 g/l beträgt; und/oder
(v) eine Aufkonzentration des Alkoholgehalts nach dem Eisbockverfahren erfolgt.

12. Verfahren nach einem oder mehreren der Ansprüche 1 bis 4 zur Herstellung von Malzwein umfassend das Vergärung einer Würze, die weitere Quellen vergärbarer Zucker enthalten kann, durch eine Hefe der Gattung *Saccharomyces diastaticus* in Kombination mit wenigstens einer weiteren Betriebshefe bei einer Temperatur von 10 bis 25 °C, wobei das Verfahren vorzugsweise weiterhin eine Endvergärung bei einer Temperatur von 13 bis 18 °C umfasst.

13. Bier oder Malzwein, das/der durch ein Verfahren nach einem oder mehreren der Ansprüche 1 bis 12 erhältlich ist.

14. Bier oder Malzwein nach Anspruch 13, das/der einen Alkoholgehalt von über 10 Vol.-% aufweist.

## Claims

1. A process for producing a strong beer or malt wine, comprising reacting a strong beer wort in a top fermentation and/or bottom fermentation step in the presence of an alcohol-tolerant yeast of the species *Saccharomyces diastaticus* and a top fermentation and/or bottom fermentation brewery yeast of the species *Saccharomyces cerevisiae* or *Saccharomyces carlsbergiensis.*

2. The process according to claim 1, wherein said strong beer wort is a top fermentation and/or bottom fermentation wort made from 100% wheat malt and/or 100% barley malt or other malts and/or mixtures thereof that is suitable for beer production.

3. The process according to claim 1 or 2, wherein
(i) the process is carried out without adding other sources of fermentable sugars; or
(ii) further sources of fermentable sugars are added; or
(iii) a cold malt extract is added to the wort.

4. The process according to one or more of claims 1 to 3, wherein said yeast of the species *Saccharomyces diastaticus* is compatible with the other (brewery) yeasts employed in the brewery process and, in particular, does not generate any significant metabolites toxic towards such yeasts, wherein said yeast of the species *Saccharomyces diastaticus* is preferably a yeast having a high osmophilicity for surviving the initial sugar concentration, exhibiting a flawless fermentation even under stress factors, and having a high alcohol tolerance towards up to 18% by weight of alcohol.

5. The process according to one or more of claims 1 to 4, wherein said beer is a bottom-fermented beer, and said wort is a bottom-fermented wort, and a bottom fermentation brewery yeast is employed in said principal bottom fermentation step in addition to said yeast of the species *Saccharomyces diastaticus.*

6. The process according to claim 5, wherein
(i) the bottom fermentation brewery yeast employed in said bottom fermentation step is of the type 34/70, 34/78, 44, 120, 128, 168, 172, 194, 199, or is a bottom fermentation brewery yeast (non-flocculent yeast) of type 66, 71, 167, a yeast of type 34/70 being more preferred; and/or
(ii) the bottom fermentation step is performed at a temperature of from 10 to 25 °C, preferably from 13 to 18 °C; and/or
(iii) the wort has a maltose content of above 20% by weight, preferably from 25 to 40% by weight, before the fermentation.

7. The process according to claim 5 or 6, wherein
(i) after an alcohol content of about 10% has been reached, a final fermentation is performed at a temperature of from 10 to 20 °C, preferably from 13 to 18 °C; and/or
(ii) a cold malt extract is added for the final fermentation; and/or
(iii) the alcohol content is increased according to the Eisbock process.

8. The process according to one or more of claims 1 to 4, wherein the beer is a top fermentation beer, and the wort is a top fermentation wort, especially wherein said top fermentation wort is a weissbier or wheat beer wort made from wheat malt or a mixture of wheat malt and another malt type, especially barley malt, spelt malt and/or another malt suitable for beer production, or a wort made from barley malt or a mixture of barley malt with another of the above mentioned malt types, and wherein a top fermentation brewery yeast is employed in the top fermentation step in addition to said yeast of the species *Saccharomyces diastaticus.*

9. The process according to claim 8, wherein
(i) the top fermentation brewery yeast employed in said top fermentation step is of type 68, 127, 149, 175, 177 or V1116, especially a brewery yeast of type 68, 175 or V1116; and/or
(ii) the fermentation step is performed at a temperature of from 10 to 20 °C, preferably from 13 to 18 °C; and/or
(iii) the wort has a maltose content of above 20% by weight, preferably from 25 to 40% by weight, before the fermentation.

10. The process according to claim 8 or 9, comprising a secondary fermentation step with the addition of a food, preferably with the addition of
(i) top and/or bottom fermented krausenbier; and/or
(ii) a non-fermented top and/or bottom fermentation wort; and/or
(iii) a cold malt extract;
wherein (i) to (iii) may contain a brewery yeast and/or a yeast of the species *Saccharomyces diastaticus.*

11. The process according to claim 10, wherein
(i) said secondary fermentation step is performed with the addition of bottom fermented krausenbier based on barley malt; and/or
(ii) said secondary fermentation step is performed at a temperature of from 10 to 20 °C, preferably from 13 to 18 °C; and/or
(iii) the proportion of food or krausenbier or malt extract in the total secondary fermentation volume is from 5 to 20%, preferably from 8 to 15%, by weight; and/or
(iv) the CO₂ content of said top fermentation beer is from 3 to 12, preferably from 6 to 9, g/l; and/or
(v) the alcohol content is increased according to the Eisbock process.

12. The process according to one or more of claims 1 to 4 for the preparation of malt wine comprising fermenting a wort, which may contain further sources of fermentable sugars, by a yeast of the species *Saccharomyces diastaticus* in combination with at least one other brewery yeast at a temperature of from 10 to 25 °C, wherein said process preferably further includes a final fermentation at a temperature of from 13 to 18 °C.

13. A beer or malt wine obtainable by a process according to one or more of claims 1 to 12.

14. The beer or malt wine according to claim 13, having an alcohol content of above 10% by volume.

## Revendications

1. Procédé de fabrication d'une bière forte ou d'un vin de malt comprenant la conversion d'un moût de bière forte lors d'une étape de fermentation haute et/ou de fermentation basse en présence d'une levure tolérante à l'alcool de l'espèce *Saccharomyces diastaticus* et d'une levure de brasserie de fermentation haute et/ou de fermentation basse de l'espèce *Saccharomyces cerevisiae* ou *Saccharomyces carlsbergensis.*

2. Procédé selon la revendication 1, dans lequel le moût de bière forte est un moût de fermentation haute et/ou de fermentation basse composé à 100 % de malt de froment et/ou à 100 % de malt d'orge ou d'autres maltes et/ou de mélanges de ceux-ci qui sont appropriés pour la fabrication de la bière.

3. Procédé selon la revendication 1 ou 2, dans lequel
(i) le procédé se produit sans ajout d'autres sources de sucres fermentescibles ; ou
(ii) on ajoute d'autres sources de sucres fermentescibles ; ou
(iii) on ajoute au moût un extrait de malt froid.

4. Procédé selon une ou plusieurs des revendications 1 à 3, dans lequel la levure de l'espèce *Saccharomyces diastaticus* est compatible avec les autres levures (de brasserie) utilisées dans le procédé de fabrication de la bière, et en particulier ne génère aucun métabolite notable toxique pour ces levures, et dans lequel, de préférence, la levure de l'espèce *Saccharomyces diastaticus* est une levure qui présente un caractère osmophile élevé pour surmonter la concentration en sucre de départ, une fermentation nette également sous des facteurs de stress et une grande tolérance à l'alcool jusqu'à 18 % en volume d'alcool.

5. Procédé selon une ou plusieurs des revendications 1 à 4, dans lequel la bière est une bière de fermentation basse et le moût un moût de fermentation basse, et dans lequel dans l'étape de fermentation basse principale on utilise, en plus de la levure de l'espèce *Saccharomyces diastaticus* de la levure de brasserie de fermentation basse.

6. Procédé selon la revendication 5, dans lequel
(i) la levure de brasserie de fermentation basse utilisée dans l'étape de fermentation basse est de type 34/70, 34/78, 44, 120, 128, 168, 172, 194, 199 ou une levure de brasserie de fermentation basse (levure poussiéreuse) de type 66, 71, 167, une levure du type 34/70 étant particulièrement préférée ; et/ou
(ii) l'étape de fermentation basse est conduite à une température de 10 à 25, de préférence de 13 à 18 °C ; et/ou
(iii) le moût contient avant la fermentation une fraction de sucre de malt supérieure à 20 % en poids, de préférence comprise entre 25 et 40 % en poids.

7. Procédé selon la revendication 5 ou 6, dans lequel
(i) après avoir atteint une teneur en alcool d'environ 10 %, on réalise une fermentation finale à une température de 10 à 20, de préférence de 13 à 18 °C ; et/ou
(ii) pour la fermentation finale, on ajoute un extrait de malt froid ; et/ou
(iii) on obtient une concentration de la teneur en alcool d'après le procédé de concentration par le froid (procédé dit de "Eisbock").

8. Procédé selon une ou plusieurs des revendications 1 à 4, dans lequel la bière est une bière de fermentation haute et le moût est un moût de fermentation haute, dans lequel en particulier le moût de fermentation haute est un moût de bière blanche ou de bière de froment issu d'un malt de froment ou d'un mélange de malt de blé ou d'une autre sorte de malt, en particulier du malt d'orge, du malt d'épeautre et/ou un autre malt qui est approprié pour la fabrication de la bière, ou un moût issu de malt d'orge ou d'un mélange de malt d'orge avec un autre des types de malt précédemment nommés, et dans lequel on utilise lors de l'étape de fermentation haute en plus de la levure de l'espèce *Saccharomyces diastaticus* une levure de brasserie de fermentation haute.

9. Procédé selon la revendication 8, dans lequel
(i) la levure de brasserie de fermentation haute utilisée dans l'étape de fermentation haute est du type 68, 127, 149, 175, 177 ou V1116, en particulier une levure de brasserie de type 68, 175 ou V1116 ; et/ou
(ii) l'étape de fermentation est conduite à une température de 10 à 20, de préférence de 13 à 18 °C ; et/ou
(iii) le moût contient avant la fermentation une fraction de sucre de malt de plus de 20 % en poids, de préférence de 25 à 40 % en poids.

10. Procédé selon la revendication 8 ou 9, comprenant une étape de post-fermentation en ajoutant un aliment, de préférence en ajoutant
(i) de la bière kräusenbier de fermentation haute et/ou basse, et/ou
(ii) un moût non fermenté, de fermentation haute et/ou de fermentation basse, et/ou
(iii) un extrait de malt froid,
où (i) à (iii) peuvent contenir une levure de brasserie et/ou une levure de l'espèce *Saccharomyces diastaticus.*

11. Procédé selon la revendication 10, dans lequel
(i) l'étape de post-fermentation est réalisée en utilisant de la kräusenbier de fermentation basse à base de malt d'orge ; et/ou
(ii) dans lequel l'étape de post-fermentation est réalisée à une température de 10 à 20, de préférence de 13 à 18 °C ; et/ou
(iii) la fraction de l'aliment ou de la kräusenbier ou de l'extrait de malt sur le volume total de post-fermentation est comprise entre 5 et 20, de préférence entre 8 et 15 % en volume ; et/ou
(iv) la teneur en CO₂ de la bière de fermentation haute est comprise entre 3 et 12, de préférence entre 6 et 9 g/l; et/ou
(v) une concentration de la teneur en alcool est obtenue d'après le procédé de concentration par le froid (procédé dit de "Eisbock").

12. Procédé selon une ou plusieurs des revendications 1 à 4 pour fabriquer du vin de malt, comprenant la fermentation d'un moût, qui peut contenir d'autres sources de sucres fermentescibles, par une levure de l'espèce *Saccharomyces diastaticus* en combinaison avec au moins une autre levure de brasserie à une température comprise entre 10 et 25 °C, le procédé comprenant de préférence en outre une fermentation finale à une température comprise entre 13 et 18 °C.

13. Bière ou vin de malt qui peut être obtenu par un procédé selon une ou plusieurs des revendications 1 à 12.

14. Bière ou vin de malt selon la revendication 13, qui présente une teneur en alcool supérieure à 10 % en volume.
